(19) Europäisches Patentamt / European Patent Office / Office européen des brevets

(11) **EP 2 869 260 A1**

(12) **EUROPEAN PATENT APPLICATION**

(43) Date of publication:
06.05.2015 Bulletin 2015/19

(51) Int Cl.:
**G06T 5/00** (2006.01)

(21) Application number: **13290262.8**

(22) Date of filing: **29.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Baillard, Caroline**
**35250 Saint-Sulpice-La-Foret (FR)**

• **Bourdon, Pascal**
**35250 Chevaigné (FR)**
• **Jouet, Pierrick**
**35000 Rennes (FR)**

(74) Representative: **Hartnack, Wolfgang**
**Deutsche Thomson OHG**
**European Patent Operations**
**Karl-Wiechert-Allee 74**
**30625 Hannover (DE)**

(54) **Method and apparatus for generating from a quantised image having a first bit depth a corresponding image having a second bit depth**

(57)  High Dynamic Range (HDR) imaging allows a significantly greater dynamic range than normal digital imaging techniques. HDR imaging devices should also be able to process or display video data having 8 bits/sample per colour, whereby it is desirable that quantisation artefacts are removed and signal dynamics are enhanced. The inventive processing reduces quantisation artefacts and provides rich dynamic content by generating using the normal law from the 8-bit quantised image an HDR initialisation image followed by image content geometry-driven Gaussian kernel filtering.

Fig. 10

**EP 2 869 260 A1**

**Description**

Technical field

The invention relates to a method and to an apparatus for generating from a quantised image having a first bit depth a corresponding image having a second bit depth that is higher than said first bit depth.

Background

In computer graphics and cinematography, High Dynamic Range Imaging (HDR) is a set of techniques that allow a significantly greater dynamic range of exposures than normal digital imaging techniques. Information stored in high dynamic range images usually corresponds to the physical values of luminance or radiance that can be observed in the real world, and requires a higher number of bits per colour channel sample than "traditional" 8 bits/sample per colour images. As an example, 16-bit ('half precision') or 32-bit floating point numbers are used for representing HDR pixel values. Tone mapping addresses the problem of strong contrast reduction from the scene radiance to the displayable range, while preserving the image details and colour appearance important for appreciating the original scene content.

Summary of invention

Reverse tone mapping, on the other hand, is defined as the process of luminance and contrast expansion in order to match those of an HDR display. For such reverse tone mapping no definite solution is existing.
Besides actual HDR source images digitalised with 16 or 32 bits/sample per colour channel resolutions, HDR imaging devices should also be able to process or display old video data, such as 8 bits/sample per colour sources. As a result, one would expect from such processing the ability to remove quantisation artefacts and to enhance signal dynamics of 8-bit sources for fully enjoying its high resolution capabilities.
A problem to be solved by the invention is to provide an improved reverse tone mapping. This problem is solved by the method disclosed in claim 1. An apparatus that utilises this method is disclosed in claim 2.
The invention introduces an improved reverse tone mapping processing for de-quantisation and for dynamic enhancement of digital video sources. Because HDR imaging is about physical values and real world images, a continuous theoretical model for image representation is used. Thereby it is taken advantage of common knowledge about human vision for processing low resolution sources. This continuous theoretical model is based on a non-linear Gaussian convolution kernel: a smoothing process is performed on the source image with specific, geometry-driven constraints in order to make sure that remaining elements of the physical source are preserved while HDR-resolution data is being generated.
The inventive processing reduces quantisation artefacts and provides rich dynamic content to video signals when increasing their bit resolution, e.g. when processing or displaying 16 bits/sample/colour data from 8 bits/sample/colour sources. Advantageously, the invention not only enables HDR imaging devices to process or display 'old' 8 bits/sample/colour channel video data, but also adds to such data extra resolution with coherent image geometry.
In principle, the inventive method is suited for generating from a quantised image having a first bit depth a corresponding image having a second bit depth that is higher than said first bit depth, said method including the steps:

- mapping said quantised image to a version thereof that has the bit depth of said second bit depth image;
- calculating, using the normal law N, an initialisation image based on said second bit depth version of said quantised image;
- performing an image content geometry-driven Gaussian kernel filtering of said initialisation image;
- comparing the absolute value of the difference between a current pixel value of said image content geometry-driven Gaussian kernel filtered version of said initialisation image and a corresponding pixel value of said quantised image with a threshold value;
- if said absolute value of the difference is smaller equal said threshold value, taking that pixel value of said content geometry-driven Gaussian kernel filtered version of said initialisation image for the corresponding pixel value of said image having said second bit depth;
- if said absolute value of the difference is greater than said threshold value, taking the corresponding pixel value from said mapped second bit depth version of said quantised image, which is correspondingly changed by said threshold value, for the corresponding pixel value of said image having said second bit depth.

In principle the inventive apparatus is suited for generating from a quantised image having a first bit depth a corresponding image having a second bit depth that is higher than said first bit depth, said apparatus including means being adapted for:

- mapping said quantised image to a version thereof that has the bit depth of said second bit depth image;
- calculating, using the normal law N, an initialisation image based on said second bit depth version of said quantised image;
- performing an image content geometry-driven Gaussian kernel filtering of said initialisation image;
- comparing the absolute value of the difference between a current pixel value of said image content geometry-driven Gaussian kernel filtered version of said initialisation image and a corresponding pixel value of said quantised image with a threshold value;
- if said absolute value of the difference is smaller equal said threshold value, taking that pixel value of said content geometry-driven Gaussian kernel filtered version of said initialisation image for the corresponding pixel value of said image having said second bit depth;
- if said absolute value of the difference is greater than said threshold value, taking the corresponding pixel value from said mapped second bit depth version of said quantised image, which is correspondingly changed by said threshold value, for the corresponding pixel value of said image having said second bit depth.

Advantageous additional embodiments of the invention are disclosed in the respective dependent claims.

Brief description of drawings

Exemplary embodiments of the invention are described with reference to the accompanying drawings, which show in:

Fig. 1     Signal quantisation;
Fig. 2     Effects of quantisation error in an image;
Fig. 3     For the image of Fig. 2, effect of 8 bits/sample/ colour channel quantisation error in an image line;
Fig. 4     For the image of Fig. 2, effect of 4 bits/sample/ colour channel quantisation error in an image line;
Fig. 5     2D Gaussian kernel;
Fig. 6     Reconstruction process: original, quantised and reconstructed image;
Fig. 7     Zoom of quantised image;
Fig. 8     Zoom of reconstructed image;
Fig. 9     Reconstruction process: colour pixel values in a line of the original, quantised and reconstructed image;
Fig. 10    Block diagram for the processing.

Description of embodiments

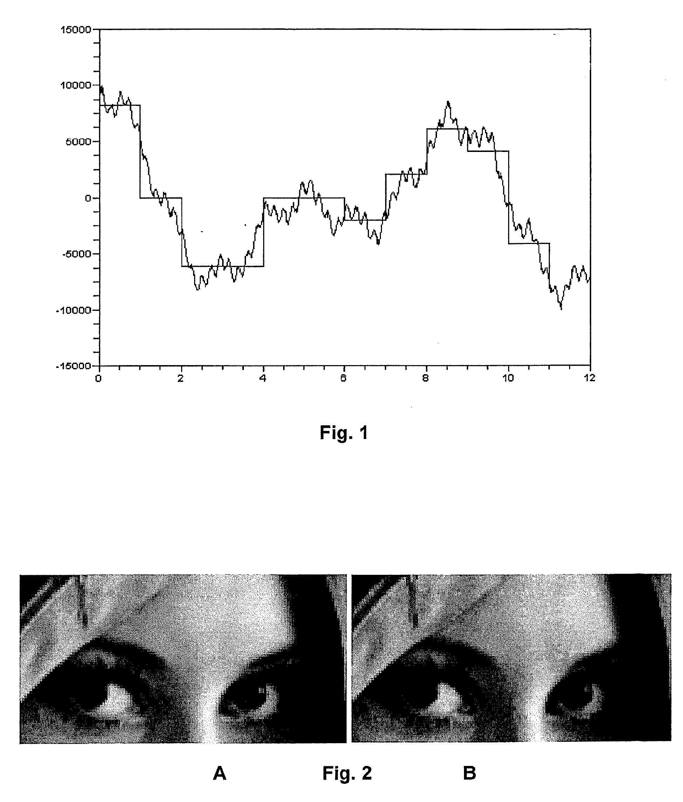

Quantisation is the procedure of constraining a signal to a discrete set of amplitude values. This is the destructive step of a digitalisation process because continuous physical data, e.g. radiance or luminance values, is approximated for further digital processing. Depending on the number of discrete symbols used for approximating the physical signal, signal degradation - i.e. 'quantisation error' or 'artefacts' - can be barely or highly noticeable. Fig. 1 illustrates such a process of quantising physical values, depicted in vertical axis vs. the pixel index of a horizontal line.

In visual data, the main problem with straight forward radiance or luminance approximation is the fact that the quantisation error generates step effects that will be highly visible due to their non-natural, discontinuous content, as illustrated in Fig. 2A and Fig. 2B.
This high level of degradation is one reason why image compression techniques apply quantisation to frequency transformed coefficients instead of time domain pixel values.

*A continuous model for image reconstruction*

Because the information stored in HDR images is supposed to represent physical values of luminance or radiance that can be observed in the real world, a continuous model is used for image representation. Let $I(x,y,t,\lambda)$ be a function that associates the amplitude $I$ of the light spectrum received from a viewer or a capture device to a spatial localisation $(x,y)$ at time t for a given wave length $\lambda$. Since HDR imaging is still based on Red-Green-Blue discretisations of the light spectrum $I(\lambda)$, a vector-valued function is used in the RGB colour space $\mathbf{I} = (R\ G\ B)^T$ to modelise spectral content, hence the image model is

$$\mathbf{I}: (x, y, t) \in \Re^3 \mapsto \mathbf{I} \in [1,3] \tag{1}$$

3

*Dequantisation constraints*

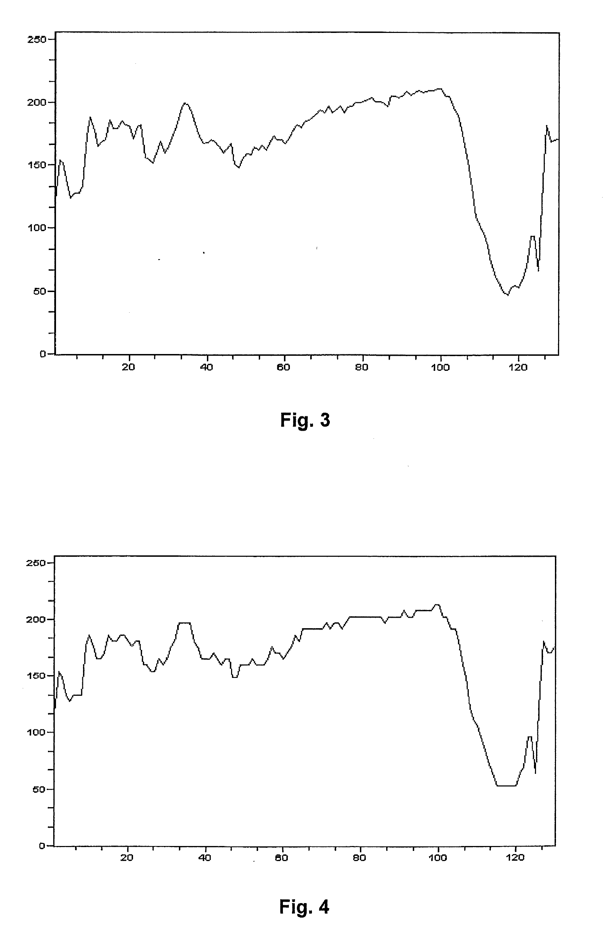

HDR imaging devices process or display 16 or even 32 bits/ sample/colour channel visual data, despite the resolution of current digital video sources which is most likely set to 8 bits/sample/colour channel (24 bit images). The invention uses this excess of resolution for giving back signal dynamic and for reducing quantisation artefacts. Fig. 2A and Fig. 3 (8 bits/sample/colour channel), and Fig. 2B and Fig. 4 (4 bits/sample/colour channel), show the two most disturbing effects of quantisation:

- Fine signal dynamics are lost and converted into a coarse approximation;
- Performing coarse approximations on highly dynamic signals leads to step effects that are highly noticeable because discontinuities are usually not found in natural pictures.

The aim of the inventive processing is to replace coarse approximations of content with highly dynamic content, and to estimate this content from the quantised video source, which is the only piece of information available for image reconstruction.

Let $\hat{I}(x,y)$ be an image approximation (i.e. a quantised image having e.g. 8-bit sample values), $2\Delta$ the resolution excess available ($2\Delta = 2^{n-k}$ units for an HDR image reconstructed with an $n$ bits/sample/colour resolution from a $k$ bits/sample/colour quantised source image), $\hat{I}(x,y)$ the reconstructed image after the recovery process, and $I_0(x,y)$ an initialisation image. Then the recovery process is performed as follows:

- Using the Normal Law **N**, $I_0(x,y)$ is generated from pseudorandom data derived from the image approximation $\hat{I}(x,y)$: $I_0(x,y) = N(2\Delta(\hat{I}(x,y) + 0.5) - 1, \Delta)$. Then, the further processing can start the recovery process from a rich dynamic content mixed with a coarse solution estimation, whereby $\hat{I}(x,y)$ is fitted to the HDR image unit system and used as mean values for the normal law N.
- Thereafter on $I_0(x,y)$ a smoothing process is performed using a geometry-driven, non-linear Gaussian kernel $G_I(x,y,\sigma)$.

*Geometry-driven Gaussian convolution*

The Gaussian smoothing operator is a 2-D convolution operator that is used to 'blur' images and to remove detail and noise. In a continuous space representation, the convolution process can be written as:

$$I(x,y) = G(x,y,\sigma)I_0(x,y) = \iint_{\Re^2} G(\mu,\upsilon,\sigma)I_0(x-\mu,y-\upsilon)d\mu d\upsilon \quad , \qquad (2)$$

where $I_0(x,y)$ is the initialisation image, $\hat{I}(x,y)$ is the reconstructed image, and $G(x,y,\sigma)$ is the convolution operator. In a Gaussian convolution process:

$$G(x,y,\sigma) = \frac{1}{2\pi\sigma}\exp(-\frac{x^2+y^2}{2\sigma}) \quad , \qquad (3)$$

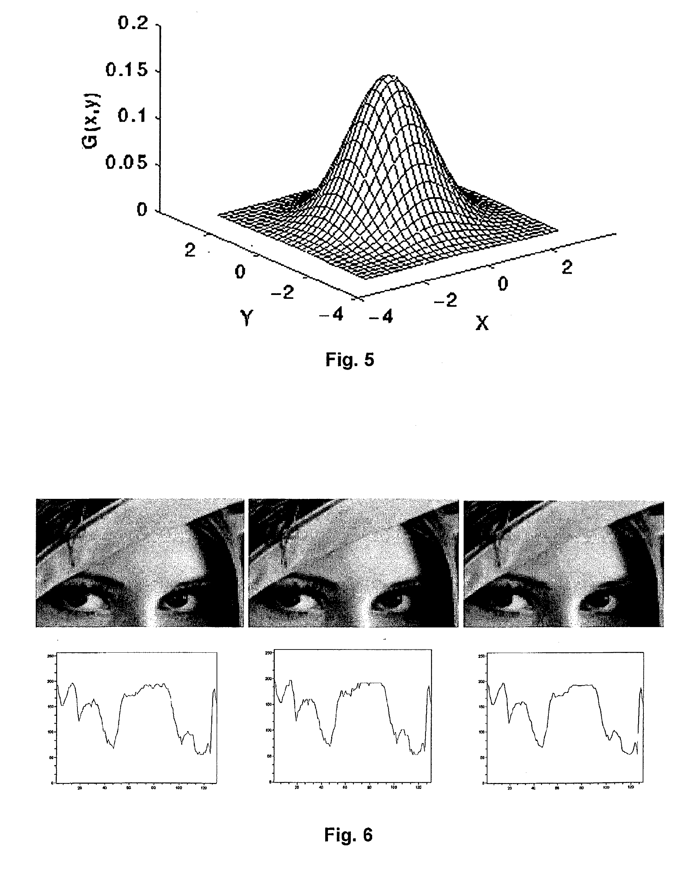

which represents the shape of a Gaussian (i.e. bell-shaped) hump shown in Fig. 5. The convolution process can be described as follows:

A Gaussian hump is centred on each pixel of image $I_0(x,y)$. The smoothing process consists in weight-averaging this pixel with its neighbours in a circular periphery (i.e. with the bottom of the hump), where weights are provided by $G(x,y,\sigma)$.

Hence the condition $\iint_{\Re^2} G(x,y,\sigma) = 1$.

However, although such local smoothing process would be useful for the desired de-quantisation processing, the problem with such Gaussian convolution is that it tends to remove too much data, especially image edges which have an important role in human vision.

As a solution to this problem, the shape of this convolution kernel is adaptively deformed for each pixel of the image. The deformation is adapted to the local picture content geometry. I.e., a circular neighbourhood is kept for homogeneous areas of the image, but ellipse-shaped or even line-shaped neighbourhoods oriented along the tangents of image contours are used for edge pixels, and a Dirac impulse (no smoothing at all) is used for fine textures.

Advantageously, such a geometry-driven kernel will facilitate smoothing of the image while preserving fine details such as edges and textures. It can be described by:

$$G_I(x, y, \sigma) = \frac{1}{2\pi\sigma}\exp(-\frac{[x\,y]^T T_I^{-1}[x\,y]}{2\sigma}) \quad,$$ (4)

where a 2x2 matrix $\mathbf{T_I}$ defines the orientation and deformation of the Gaussian kernel and is calculated by:

$$\mathbf{T_I} = f_-\left(\sqrt{\lambda_+^{\;*} + \lambda_-^{\;*}}\right)\theta_-^{\;*}\theta_-^{\;*T} + f_+\left(\sqrt{\lambda_+^{\;*} + \lambda_-^{\;*}}\right)\theta_+^{\;*}\theta_+^{\;*T},$$ (5)

with $\lambda_+^*$, $\lambda_-^*$ representing the highest and lowest Eigen values of a smoothed version of Di Zenzo's tensor matrix $\mathbf{D_I}$, and $\theta_+^*$, $\theta_-^*$ representing their corresponding Eigen vectors. The Di Zenzo tensor matrix (S. Di Zenzo, "A note on the gradient of a multi-image", Computer Vision, Graphics, and Image Processing, volume 33, issue 1, Jan. 1986, pages 116 - 125) is used for studying local geometry in colour images:

$$\mathbf{D_I} = \sum_{i=1}^{m} \nabla I_i \cdot \nabla I_i^{\;T} = \begin{bmatrix} \sum_{i=1}^{m}\left(\frac{\partial I_i}{\partial x}\right)^2 & \sum_{i=1}^{m}\frac{\partial I_i}{\partial x}\cdot\frac{\partial I_i}{\partial y} \\ \sum_{i=1}^{m}\frac{\partial I_i}{\partial x}\cdot\frac{\partial I_i}{\partial y} & \sum_{i=1}^{m}\left(\frac{\partial I_i}{\partial y}\right)^2 \end{bmatrix} \quad,$$ (6)

where $I_1, I_2, ..., I_m$ are the different colour components of the image, and in the invention $I_1 = R$, $I_2 = G$, $I_3 = B$ and $m = 3$.

In case of a scalar (i.e. greyscale) image, this tensor matrix will return the image gradient as $\lambda_+^*$ and $\theta_+^*$.
Constraint functions $f_-(.)$ and $f_+(.)$ are used for re-shaping the convolution kernel. These constraint functions are defined in the following way:

In homogeneous areas, i.e. where $\sqrt{\lambda_+^* + \lambda_-^*} \to 0$, a standard Gaussian kernel with standard deviation $\sigma$ is used:

$$\lim_{s\to 0} f_-(s) = \lim_{s\to 0} f_+(s) = 1$$ (7)

In edge or texture areas, i.e. where $\sqrt{\lambda_+^* + \lambda_-^*} \to +\infty$, it is desired to not smooth at all, or to smooth along tangents to the edges. In other words, it is desired that both functions decrease to zero, with $f_-(.)$ having a faster decrease rate than $f_+(.)$:

$$\lim_{s\to +\infty} f_-(s) = 0, \quad \lim_{s\to +\infty} f_+(s) = 0, \quad \text{and} \quad \lim_{s\to +\infty}\frac{f_-(s)}{f_+(s)} = 0$$ (8)

These properties are achieved e.g. by the two following functions:

$$f_-(s) = \frac{1}{\sqrt{1+s^2}} \quad \text{and} \quad f_+(s) = \frac{1}{\sqrt{1+s^2}}$$ (9)

*Data fidelity constraint and final algorithm*

Throughout this geometry-driven convolution processing, it is also supposed that the coarse approximation $\hat{I}(x,y)$ is still valid, and pixel amplitude values are not wanted to evolve change beyond a data range, which is actually the resolution excess $2\Delta$. Hence the following data fidelity constraint is introduced: $\|I(x,y)-\hat{I}(x,y)\| \leq \Delta$. (10) The final processing corresponds to:

$$I(x,y) = \left\{ \begin{array}{l} \frac{G_I(x,y,\sigma)I_0(x,y) \quad if \quad \|G_I(x,y,\sigma)I_0(x,y)-\hat{I}(x,y)\|\leq\Delta}{(2\Delta(\hat{I}(x,y)+0.5)-1) + sgn\left(G_I(x,y,\sigma)I_0(x,y)-\hat{I}(x,y)\right) \quad else} \end{array} \right\} \qquad (11)$$

wherein $G_I$ is the geometry-driven Gaussian kernel, $I_0(x,y)$ is the initialisation image described above, $\hat{I}(x,y)$ is the coarse approximation or input image described above, and $I(x,y)= G_I(x,y,\sigma)I_0(x,y)$. Equation (11) is equivalent to:

$$I(x,y) = \left\{ \begin{array}{l} \frac{G_I(x,y,\sigma)N(2\Delta(\hat{I}(x,y)+0.5)-1,\Delta) \quad if \quad \|I(x,y)-\hat{I}(x,y)\|\leq\Delta}{(2\Delta(\hat{I}(x,y)+0.5)-1) + sgn\left(G_I(x,y,\sigma)I_0(x,y)-\hat{I}(x,y)\right) \quad else} \end{array} \right\}$$

*Experimental results*

Fig. 6 to 9 show experimental results obtained with the inventive processing. The left part of Fig. 6 shows an 'original' image quantised with 8 bits/sample/colour channel, the medium part of Fig. 6 shows the corresponding image quantised with 4 bits/sample/colour channel, and the right part of Fig. 6 shows the corresponding image recovered from 4 to 8 bits/sample/colour channel.

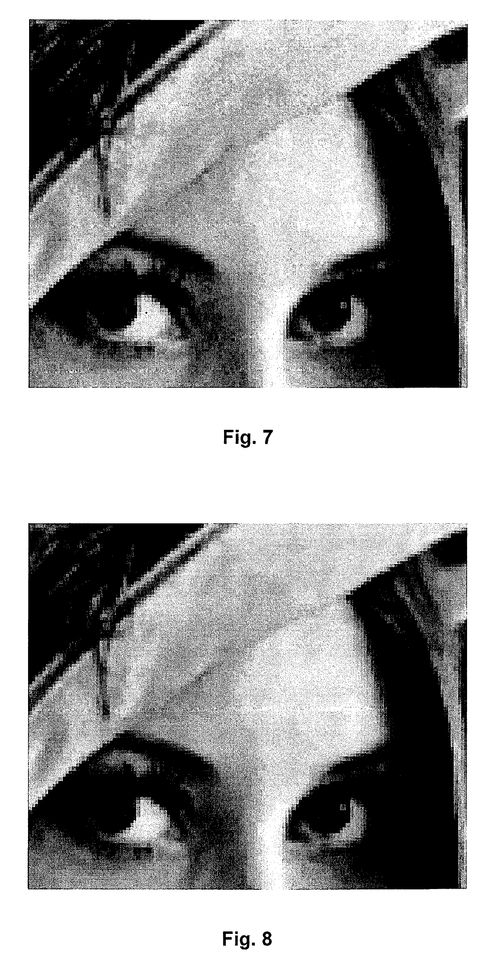

Fig. 7 shows the Fig. 6 medium part image in more detail and Fig. 8 shows the Fig. 6 right part image in more detail.

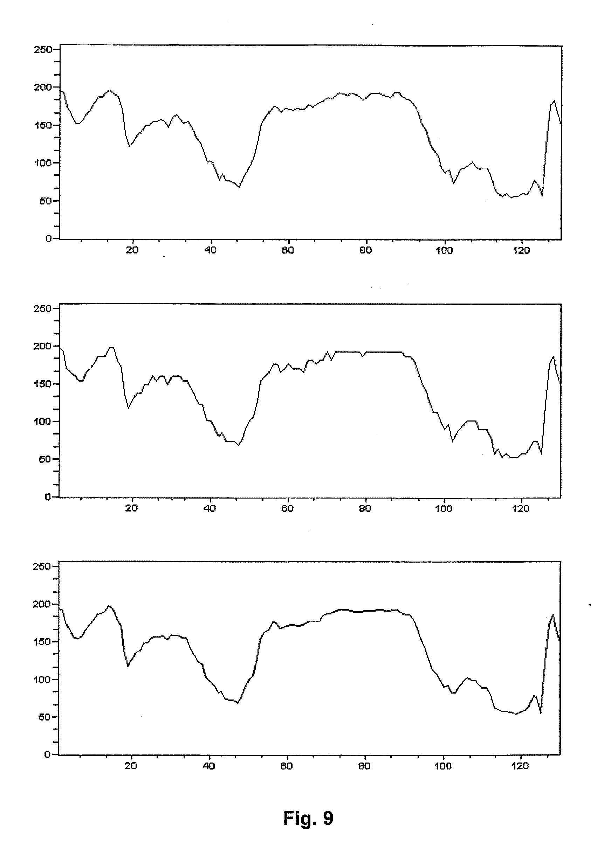

Fig. 9 shows the pixel value vs. line representations of Fig. 6 in more detail, on the top for 'original' 8 bits/sample/ colour channel, in the middle for 4 bits/sample/colour channel, and in the bottom recovered from 4 to 8 bits/sample/colour channel. In tis recovered representation, especially at line captures, the inventive processing is able to smooth step effects while preserving or even generating fine dynamics.

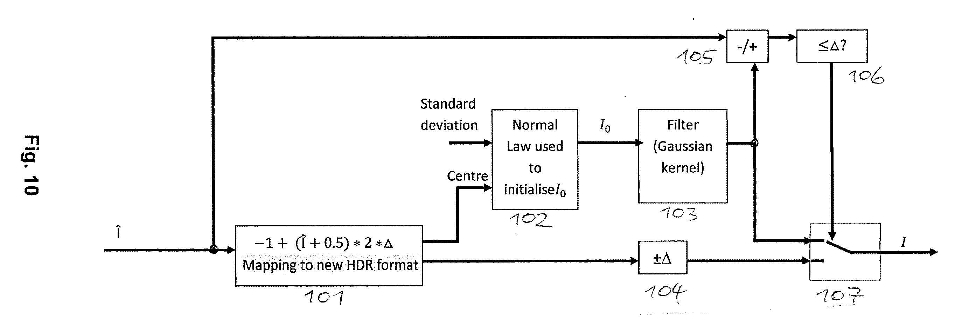

In Fig. 10, the quantised image signal $\hat{I}(x,y)$ is fed to a mapping step or stage 101 and to a combiner step or stage 105. In step/stage 101 the quantised image signal $\hat{I}(x,y)$ is mapped to the desired HDR format, e.g. from the $k = 8$ bit format to an $n = 16 \; or \; 32$ bit format, by calculating for each sample value $2\Delta(\hat{I}(x,y)+0.5)-1$, $2\Delta=2^{n-k}$. The output pixel values of step/stage 101 pass through a adder/subtractor step or stage 104, which adds $\Delta$ to, or subtracts $\Delta$ from, the output signal of step/stage 101.
In step or stage 102, the Normal law is used to calculate the pixel values of an initialisation image $I_0(x,y)$ from the output pixel values of step/stage 101 representing centre or mean values and from the standard deviation. Thereafter the initialisation image $I_0(x,y)$ is filtered with an image content geometry-driven Gaussian kernel in filter 103. The current output pixel value of filter 103 and the corresponding pixel values of $\hat{I}(x,y)$ are fed to combiner step/stage 105, which calculates $I(x,y) - \hat{I}(x,y)$ and passes the output pixel value to a comparison step or stage 106. Step/stage 106 determines whether $\|G_I(x,y,\sigma)I_0(x,y)-\hat{I}(x,y)\|\leq\Delta$ and controls switch 107. If true, switch 107 selects the output pixel value of filter 103 as corresponding pixel value of the reconstruction image $I(x,y)$. If not true, switch 107 selects the output pixel value of step/stage 104.
In case the condition in the upper line of equation 11 is not true, for estimating $\hat{I}(x,y)$ the result of the convolution $G_I(x,y,\sigma)I_0(x,y)$ is not used because the current pixel value is out of the allowed range. Instead, the centre of the normal law $2\Delta(\hat{I}(x,y)+0.5)-1$ is taken, and value $\Delta$ is added or removed in step/stage 104 such that the resulting pixel value is just at the limit of the allowed range.
The inventive processing can be carried out by a single processor or electronic circuit, or by several processors or electronic circuits operating in parallel and/or operating on different parts of the inventive processing.
The invention can also be used in post-production and image restoration/enhancement.

**Claims**

1. Method for generating from a quantised image ($\hat{I}(x,y)$) having a first bit depth a corresponding image ($I(x,y)$) having a second bit depth that is higher than said first bit depth, said method including the steps:

   - mapping (101) said quantised image ($\hat{I}(x,y)$) to a version thereof that has the bit depth of said second bit depth image;
   - calculating (102), using the normal law $N$, an initialisation image ($I_0(x,y)$) based on said second bit depth version of said quantised image;
   - performing (103) an image content geometry-driven Gaussian kernel filtering of said initialisation image ($I_0(x,y)$) ;
   - comparing (105, 106) the absolute value of the difference between a current pixel value of said image content geometry-driven Gaussian kernel filtered version of said initialisation image and a corresponding pixel value of said quantised image ($\hat{I}(x,y)$) with a threshold value ($\Delta$);

- if said absolute value of the difference is smaller equal said threshold value ($\Delta$), taking (107) that pixel value of said content geometry-driven Gaussian kernel filtered version of said initialisation image for the corresponding pixel value of said image **(I(x,y))** having said second bit depth;

- if said absolute value of the difference is greater than said threshold value ($\Delta$), taking (107) the corresponding pixel value from said mapped second bit depth version of said quantised image, which is correspondingly changed (104) by said threshold value ($\Delta$), for the corresponding pixel value of said image **(I(x,y))** having said second bit depth.

2. Apparatus for generating from a quantised image **($\hat{I}(x,y)$)** having a first bit depth a corresponding image **(I(x,y))** having a second bit depth that is higher than said first bit depth, said apparatus including means being adapted for:

- mapping (101) said quantised image **($\hat{I}(x,y)$)** to a version thereof that has the bit depth of said second bit depth image;

- calculating (102), using the normal law N, an initialisation image **($I_0(x,y)$)** based on said second bit depth version of said quantised image;

- performing (103) an image content geometry-driven Gaussian kernel filtering of said initialisation image **($I_0(x,y)$)** ;

- comparing (105, 106) the absolute value of the difference between a current pixel value of said image content geometry-driven Gaussian kernel filtered version of said initialisation image and a corresponding pixel value of said quantised image **(I(x,y))** with a threshold value **($\Delta$);**

- if said absolute value of the difference is smaller equal said threshold value ($\Delta$), taking (107) that pixel value of said content geometry-driven Gaussian kernel filtered version of said initialisation image for the corresponding pixel value of said image **(I(x,y))** having said second bit depth;

- if said absolute value of the difference is greater than said threshold value ($\Delta$), taking (107) the corresponding pixel value from said mapped second bit depth version of said quantised image, which is correspondingly changed (104) by said threshold value ($\Delta$), for the corresponding pixel value of said image **(I(x,y))** having said second bit depth.

3. Method according to claim 1, or apparatus according to claim 2, wherein the corresponding pixel value of said mapped second bit depth version of said quantised image is changed by adding, or removing, respectively (104) said threshold value ($\Delta$) such that the resulting pixel value is just at the limit of the allowed range.

4. Method according to the method of claim 1 or 3, or apparatus according to the apparatus of claim 2 or 3, wherein said quantised image $\hat{I}(x,y)$ is mapped to said second bit depth by calculating $2\Delta(\hat{I}(x,y)+0.5)-1$, $2\Delta=2^{n-k}$, **n** being said second bit depth and **k** being said first bit depth.

5. Method according to the method of claim 4, or apparatus according to the apparatus of claim 4, wherein said initialisation image **$I_0(x,y)$** is derived from said mapped second bit depth version of said quantised image by computing **$I_0(x,y) = N(2\Delta(\hat{I}(x,y) + 0.5) - 1, \Delta)$,** N being the Normal Law.

6. Method according to the method of one of claims 1 and 3 to 5, or apparatus according to the apparatus of one of claims 2 to 5, wherein for performing (103) said image content geometry-driven Gaussian kernel filtering of said initialisation image **($I_0(x,y)$)** the Di Zenzo tensor matrix is used in edge or texture image areas, and in homogeneous image areas a standard Gaussian kernel with standard deviation $\sigma$ is used.

Fig. 1

A          Fig. 2          B

**Fig. 3**

**Fig. 4**

Fig. 5

Fig. 6

Fig. 7

Fig. 8

**Fig. 9**

Fig. 10

Europäisches
Patentamt

European
Patent Office

Office européen
des brevets

# EUROPEAN SEARCH REPORT

Application Number

EP 13 29 0262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 096 425 A2 (HEWLETT PACKARD CO [US]) 2 May 2001 (2001-05-02) * paragraphs [0001], [0003], [0004] * ----- | 1-6 | INV. G06T5/00 |
| X | FRANCESCO BANTERLE ET AL: "High Dynamic Range Imaging and Low Dynamic Range Expansion for Generating HDR Content", COMPUTER GRAPHICS FORUM, vol. 28, no. 8, 1 December 2009 (2009-12-01), pages 2343-2367, XP055031838, ISSN: 0167-7055, DOI: 10.1111/j.1467-8659.2009.01541.x * section 3; page 2346 - page 2352; figures 2-8 * ----- | 1-6 | |
| X | WO 2008/066840 A2 (DOLBY LAB LICENSING CORP [US]; BANTERLE FRANCESCO [GB]; LEDDA PATRICK) 5 June 2008 (2008-06-05) * figure 1 * ----- | 1-6 | |

TECHNICAL FIELDS
SEARCHED    (IPC)

G06T

The present search report has been drawn up for all claims

| Place of search | Date of completion of the search | Examiner |
|---|---|---|
| Munich | 31 March 2014 | Krawczyk, Grzegorz |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 29 0262

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2014

| Patent document cited in search report | | Publication date | Patent family member(s) | | Publication date |
|---|---|---|---|---|---|
| EP 1096425 | A2 | 02-05-2001 | EP | 1096425 A2 | 02-05-2001 |
| | | | JP | 2001169112 A | 22-06-2001 |
| | | | US | 6731822 B1 | 04-05-2004 |
| WO 2008066840 | A2 | 05-06-2008 | AU | 2007325737 A1 | 05-06-2008 |
| | | | BR | PI0719548 A2 | 21-01-2014 |
| | | | CA | 2669028 A1 | 05-06-2008 |
| | | | CN | 101595719 A | 02-12-2009 |
| | | | EP | 2098060 A2 | 09-09-2009 |
| | | | HK | 1135543 A1 | 15-03-2013 |
| | | | JP | 5411706 B2 | 12-02-2014 |
| | | | JP | 2010511326 A | 08-04-2010 |
| | | | KR | 20090091207 A | 26-08-2009 |
| | | | MY | 147417 A | 14-12-2012 |
| | | | RU | 2009123903 A | 10-01-2011 |
| | | | US | 2010208143 A1 | 19-08-2010 |
| | | | WO | 2008066840 A2 | 05-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. DI ZENZO.** A note on the gradient of a multi-image. *Computer Vision, Graphics, and Image Processing,* January 1986, vol. 33 (1), 116-125